# EUROPEAN PATENT APPLICATION

(11) **EP 0 798 338 A2**
(43) Date of publication of application: **01.10.1997**
(21) Application number: 97301780.9
(22) Date of filing: 17.03.1997
(51) Int. Cl.: C08K 5/54, C08L 83/04

(54) **Oximosilicon-modified silicone sealant compositions**

(30) Priority: 26.03.1996 US 622074
(71) Applicant: DOW CORNING CORPORATION, Midland Michigan 48686-0994 (US)
(72) Inventor: Carbary, Lawrence Donald, Midland, Michigan 48640 (US); Freiberg, Alan Lee, White Lake, Michigan 48363 (US); Klosowski, Jerome Melvin, Bay City, Michigan 48706 (US); Lower, Loren Dale, Midland, Michigan 48640 (US)
(74) Representative: Dowden, Marina

(57) **Abstract**

A method is disclosed of forming a seal between two or more non-porous substrates by adding an oximosilicon compound to a prepared roomtemperature-vulcanizable silicone sealant composition which is comprised of an alkoxy ended polydiorganosiloxane, a crosslinker having silicon-bonded methoxy or ethoxy, a filler, a titanate catalyst, and by-produced methanol or ethanol that is obtained during the manufacture of the silicone sealant composition. applying the sealant composition to at least two non-porous substrates forming an assembly of an uncured sealant composition bonding them together, subjecting the assembly to conditions which would ordinarily form detrimental bubbles if the oximosilicon compound were not present, and completely curing the composition to form an assembly of at least two non-porous substrates bonded by cured sealant that is essentially free of detrimental bubbles. Such a method is valuable in forming gaskets which are used in the internal combustion engine industry.

## Description

This invention relates to a method of bonding a room temperature vulcanizable (RTV) silicone sealant compostion to substrates in a confined configuration.

The use of silicone sealants to bond substrates together in various configurations, such as in the formation of gaskets, has been extensively applied in the automotive industry for internal combustion engines. Neutral silicone sealants for such purposes are highly desirable because they have little or no deleterious effects on the metal or plastic substrates against which they are cured. However, when such sealants are used, especially those which contain silicon-bonded alkoxy groups and titanate curing catalysts, bubbles deleteriously form in the sealant during the curing process. Moreover, this situation is exacerbated when the sealant composition is used in confined configurations and when the substrates are heated during the curing process, such as temperatures exceeding 40°C. Bubbles are unacceptable and increase the chances of the cured product failing to perform its intended function when compared to sealant compositions not cured under such conditions. The reason for bubble formation under such conditions has not been specifically determined, but it is believed that by-product alcohols formed during preparation of the sealant composition collect in small pockets within the mass and that during the curing process said alcohols vaporize and become trapped in the rapidly curing sealant composition to produce the bubbles. We realize that there may be other explanations for the bubble phenomenon and do not wish to be held to this specific theory.

It is known from U.S. Patent 4,956,435 to make a composition comprising a trialkoxysilethylene endblocked polydiorganosiloxane, alkoxysilane crosslinker, an oxime compound, and titanium catalyst to produce a faster, neutral curing composition compared to prior art compositions without the oxime compound. However, this approach does not address or solve the bubble formation problem.

Sealant compositions with bubbles in them, for example, a formed-in-place-gasket (FIPG) may result in reduced physical properties that lead to failure such as leaking. This condition can lead to performance problems. The solution to this bubbling problem is the object of the present invention.

It is an object of our invention to eliminate the problem of bubble formation in sealant compositions which are cured in confined configurations, especially where the substrates confining a sealant composition are hot.

This invention introduces a method of forming a seal between at least two non-porous substrates comprising
(I) adding from 0.5 to 3 inclusive weight percent, based on the total weight of a RTV silicone sealant composition, of an oximosilicon compound which is an oximosilane or a mixture of oximosilanes and which has a general formula RₓSi(OX)_{y}(OR¹)_{z} in which R is methyl, ethyl, vinyl, or phenyl, R¹ is methyl or ethyl, OX is an alkylmethylketoximo in which the alkyl group has from 1 to 5 carbon atoms inclusive, x has an average value of from 0 to 2 inclusive, y has an average value of from 2 to 4 inclusive, z has an average value of from 0 to 2 inclusive, the sum of x, y, and z is 4, and the mixture of oximosilanes have at least 80% of the oximosiiane molecules with 2 or more alkylmethylketoximo groups per molecule, to a prepared RTV silicone sealant composition comprising a polydiorganosiloxane having endgroups containing a silicon atom with at least two silicon-bonded alkoxy groups or alkoxyalkoxy groups wherein the alkoxy is methoxy, ethoxy, propoxy, or butoxy and the alkoxyalkoxy is ethoxymethoxy, methoxyethoxy, methoxymethoxy, or ethoxyethoxy, a crosslinker having at least three silicon-bonded alkoxv groups per molecule where the alkoxy is methoxy or ethoxy, a filler, a titanium catalyst for promoting room temperature cure of the silicone sealant composition, and by-product methanol or ethanol formed during the preparation of the RTV silicone sealant composition;
(II) applying the resulting silicone sealant composition from (I) to at least one non-porous substrate, forming an assembly of the uncured silicone sealant composition bonding the non-porous substrate to at least one other non-porous substrate;
(III) subjecting the assembly to conditions which form detrimental bubbles if the oximosilicon compound is not present prior to the cure of the silicone sealant composition; and
(IV) completely curing the silicone sealant composition thereby generating an assembly of at least two non-porous substrates bonded with a cured silicone sealant which is essentially free of detrimental bubbles.

The method of this invention comprises modifying a RTV silicone sealant composition by admixing 0.5 to 3 weight percent inclusive, based on the total weight of the silicone sealant composition, of an oximosilicon compound. The resulting uncured product is then brought into contact with at least one non-porous substrate surface and an assembly is formed by bonding at least one other non-porous substrate with the uncured RTV silicone sealant composition. This forms a confined configuration, especially under conditions where the configuration is exposed to a temperature of at least 40°C. during the curing process. Next, the substrate and sealant composition combination are exposed to curing conditions, such as atmospheric moisture, thereby obtaining a silicone sealant bonded to at least two substrates in a confined configuration. This method, which uses an oximosilicon compound, results in a configuration where at least two substrates are bonded by silicone sealant that has a reduced number of bubbles compared to an equivalent silicone sealant without oximosilicon compound. In addition to reduction in the number of bubbles, the bubbles are overall smaller in size.

For this invention, a "confined configuration" is one in which the silicone sealant composition during cure has at least one small surface exposed to a moisture containing atmosphere. For example, a surface of a gasket has an exposed edge which is small compared to the total gasket and total sealant surfaces, that is exposed to air and in contact with non-porous substrates. Because the compositions of this invention cure by exposure to the moisture in the atmosphere, atmospheric exposure is necessary.

Our method employs oximosilicon compounds in amounts from 0.5 to 3 weight percent inclusive based on the total weight of the RTV silicone sealant composition (0.5-3 wt% oximosilicon compound and 97-99.5 wt% of a prepared RTV composition). Preferably, the amount of the oximosilicon compound added to the prepared RTV silicone sealant composition is from 0.5 to 2 weight percent. These amounts of oximosilicon compounds provide the required reduction in bubble formation and do not significantly change the curing properties, the cured properties of the silicone sealant, or affect the bond between the cured silicone sealant and the substrates. The oximosilicon compound may be added as mixtures with solvents. Some of the oximosilicon compounds are more readily handled when some organic solvents are present such as toluene or hexane. Solvents are preferably not used.

The oximosilicon compounds useful in our method are oximosilanes or mixtures of oximosilanes. They are those which contain at least two alkylmethylketoximo groups per molecule, and are selected from those defined by the general formula RₓSi(OX)_{y}(OR')_{z} (A) in which R is methyl, ethyl, vinyl, or phenyl; R' is methyl or ethyl, x has an average value of from 0 to 2 inclusive; y has an average value of from 2 to 4 inclusive, z has an average value of from 0 to 2 inclusive and the sum of x, y, and z is 4. OX represents an alkylmethylketoximo group and are those ketoximo groups in which the alkyl has from 1 to 5 carbon atoms, including methyl, ethyl, propyl (n-propyl and isopropyl), butyl (n-butyl and isobutyl), and amyl. Examples of the oximosilanes of formula (A) are methyltri(ethylmethylketoximo)silane. methyltri(dimethylketoximo)silane, ethyltri(ethylmethylketoximo)silane, tetra(ethylmethylketoximo)silane, vinyltri(ethylmethylketoximo)silane, phenyltri(ethylmethylketoximo)silane, methyldi(ethylmethylketoximo)methoxysilane, methoxytri(ethylmethylketoximo)silane, dimethoxy-di(ethylmethylketoximo)silane, methyldi(ethylmethylketoximo)ethoxysilane, ethoxytri(ethylmethylketoximo)silane, diethoxydi(ethylmethylketoximo)silane, methyltri(propylmethylketoximo)silane, ethyltri(butylmethylketoximo)silane, vinyltri(amylmethylketoximo)silane, methyldi(isopropylmethylketoximo)methoxysilane, and various mixtures of oximosilanes in which at least 80% of the silane molecules have at least two alkylmethylketoximo groups per molecule. Preferred mixtures of oximosilanes are those in which x is 1, R is methyl, R' is methyl, y is less than 3, z is greater than 0.1, and the sum of x, y, z is 4. A preferred alkylmethylketoximo is ethylmethylketoximo. In the mixtures of oximosilanes, other silanes can be present as long as the combined mixture is within general formula (A). Examples of such silanes are methyl(ethylmethylketoximo)dimethoxysilane, trimethoxy(ethylmethylketoximo)silane, ethyl(ethylmethylketoximo)dimethoxysilane, methyl(ethylmethylketoximo)diethoxysilane, triethoxy(ethylmethylketoximo)silane and ethyl(ethylmethylketoximo)diethoxysilane. The preferred oximosilicon compound is vinyltri(ethylmethylketoximo)silane.

The oximosilicon compound is mixed with a prepared RTV silicone sealant composition which comprises a polydiorganosiloxane having endgroups containing a silicon atom that has at least two silicon-bonded alkoxy groups selected from methoxy, ethoxy, propoxy and butoxy or alkoxyalkoxy groups selected from methoxymethoxy, ethoxymethoxy, methoxyethoxy, and ethoxyethoxy; a crosslinker having at least three silicon-bonded alkoxy groups per molecule where the alkoxy is methoxy or ethoxy; a filler; a titanium catalyst for promoting room temperature cure of the silicone sealant composition; and by-product methanol or ethanol formed during the preparation of the RTV silicone sealant composition. With the exception of our recognition that by-product methanol or ethanol is present, these RTV silicone sealant compositions are well known in the art and are typically illustrated by U.S. Patents 3,151,099; 3,161,614; 3,175,993; 3,334,067; 4,871,827; 4,898,910 and 4,956,435.

The amount of by-product methanol or ethanol is expected to be less than 0.5 weight percent of the total weight of the prepared RTV silicone sealant composition, preferably less than 0.2 weight percent. If the amount of methanol or ethanol is greater than 0.5 weight percent, the amount of oximosilicon compound required to have a substantial effect on the reduction of bubbles would cause the properties of either the sealant composition, or the properties of the cured sealant, to be adversely affected. Consequently, it is undesirable to use our method for RTV silicone sealant compositions which contain more than 0.5 weight percent by-product methanol and ethanol.

The polydiorganosiloxanes of the prepared RTV silicone sealant compositions are those which have endgroups containing silicon atoms with at least two alkoxy groups or alkoxyalkoxy groups per endgroup. These polydiorganosiloxanes include those in which the linkages between the silicon atoms of the polymer chain are oxygen atoms and those polymers where the linkages between the silicon atoms are oxygen atoms and the end segments contain at least one linkage of a divalent hydrocarbon radical between the silicon atoms of the polymer chain. These polydiorganosiloxanes are known in the art as described above. The polydiorganosiloxanes are also mixtures of polymers wherein some of the polydiorganosiloxanes have one endgroup as a triorganosiloxy unit, such as trimethylsiloxy or vinyldimethylsiloxy, and the other endgroup is a silicon-bonded alkoxy or alkoxyalkoxy unit. In these mixtures, less than 50 percent of the total endgroups are triorganosiloxy for polydiorganosiloxanes with divalent oxygen atoms linking the silicon atoms of the polymer chain. Preferably, less than 20 percent of the endgroups are triorganosiloxy. In those mixtures of polydiorganosiloxanes which have end segments where divalent hydrocarbon radicals link some of the polymer chain silicon atoms, there is from 3 to 40 percent of the endgroups as triorganosiloxy units that are preferably vinyldimethylsiloxy. Preferably, the triorganosiloxy endgroups are present in less than 20 percent of the total endgroups. Each endgroup which bears silicon-bonded alkoxy groups or alkoxyalkoxy groups have, on average, at least two alkoxy groups or two alkoxyalkoxy groups per endgroup silicon atom. The alkoxy groups are methoxy, ethoxy, propoxy, or butoxy and the alkoxyalkoxy groups are methoxymethoxy, ethoxymethoxy, ethoxyethoxy and methoxyethoxy.

The polydiorganosiloxanes having endgroups containing silicon atoms with at least two silicon-bonded alkoxy groups or alkoxyalkoxy groups per silicon endgroup, and where the silicon atoms of the polymer chain are linked by oxygen atoms, are exemplified by the disclosures of U.S. Patents 3,151,099, 3,161,614 and 3,175,993 and are illustrated by the formula 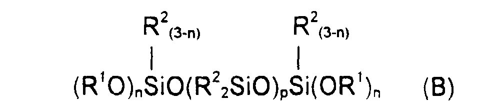 and by the mixtures of polydiorganosiloxanes of formula (B) or polydiorganosiloxanes of the formula 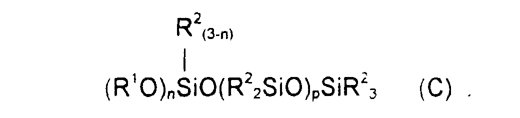 In the above formulae, R¹ is alkyl of from 1 to 5 carbon atoms, such as methyl, ethyl, propyl, isopropyl, butyl, isobutyl and amyl, or an alkoxyalkoxy of 2 to 4 carbon atoms, such as methoxymethoxy, ethoxymethoxy, methoxyethoxy, and ethoxyethoxy; R² is methyl, ethyl, vinyl, or phenyl; n is 2 or 3, p has an average value of at least 200. As illustrated, alkoxy containing endgroups are those which are preferably methoxy, ethoxy or combinations thereof. The preferred polydiorganosiloxanes are the polydimethylsiloxanes, and especially those with viscosities at 25°C of from 5 to 150 Pa·s.

The polydiorganosiloxanes with end segments containing linkages of divalent hydrocarbon radicals between some of the silicon atoms of the polymer chain are also described in U.S. Patents 3,175,993, 4,871,827 and 4,898,910. Their polydiorganosiloxanes are illustrated by the formula 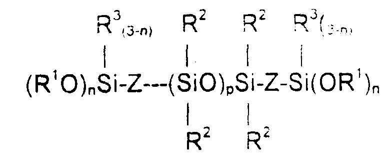 where R¹, R², n, and p are as described above, R³ is methyl, ethyl, or phenyl, and Z is a divalent hydrocarbon radical or a combination of divalent hydrocarbon radicals and siloxane oxygen radicals. The divalent hydrocarbon radicals are those having from 2 to 18 inclusive carbon atoms and are illustrated by ethylene, propylene, butylene, pentylene, and hexylene, preferably ethylene. Where Z is a combination of divalent hydrocarbon radicals and siloxane oxygen radicals, the polydiorganosiloxanes with end segments containing divalent hydrocarbon linkages and divalent oxygen atom linkages between the polymer chain silicon atoms, have end segments that contain as Z, the formula 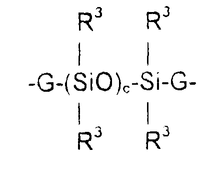 where c is 1 to 6, R³ is defined above, and G is a divalent hydrocarbon radical free of aliphatic unsaturation of 2 to 18 carbon atoms.

These polydiorganosiloxanes are prepared by reacting a hydrogen endblocked polydiorganosiloxane with a silane having an alkenyl radical in the presence of a hydrosilylation catalyst such as a platinum compound or complex. If one uses a silane of the following formula one will make a polydiorganosiloxane as described in U.S. Patent 3,175,993, 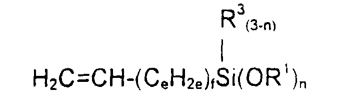 where e is 1 to 16, f is 0 or 1, and R¹, R², R³, and n are defined above. If one uses an endcapper, such as one of the following formula, those polydiorganosiloxanes described by U.S. Patents 4,871,827 and 4,898,910 are produced, 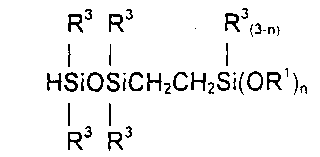 where R¹, R², and n are as defined above. The preferred polydiorganosiloxanes of this kind are those described immediately above where the divalent hydrocarbon radical is ethylene and has a viscosity at 25°C. of 5 to 150 Pa·s.

The crosslinkers of the RTV silicone sealant compositions are alkoxysilanes which have at least three alkoxy groups per molecule wherein the alkoxy groups are either methoxy or ethoxy. These alkoxysilanes preferably contain three or four alkoxy groups per molecule, and are illustrated by methyltrimethoxysilane, methyltriethoxysilane, vinyltrimethoxysilane, vinyltriethoxysilane, ethyltrimethoxysilane, ethyltriethoxysilane, phenyltrimethoxysilane. phenyltriethoxysilane, tetraethoxysilane, mixtures of these alkoxysilanes and their partial hydrolyzates. Preferably, the alkoxysilanes are methyltrimethoxysilane, or mixtures, wherein methyltrimethoxysilane comprises a majority of the alkoxysilanes in the mixture. The amount of alkoxysilane crosslinker is preferably from 1 to 10 weight percent based on the total weight of the RTV silicone sealant composition, more preferably from 3 to 8 weight percent. As the amount of crosslinking alkoxysilane increases, the potential for increasing the amount of by-product methanol or ethanol also increases, and therefore the amount of bubble formation can be considered as directly proportional to the crosslinker concentration. The shelf-life stability of our oximosilicon compound containing a prepared RTV silicone sealant composition is also directly proportional to crosslinker concentration.

The RTV silicone sealant compositions, to which our oximosilicon compound is added, also comprise a filler that is selected from those known to be useful in RTV silicone sealants. These fillers include calcium carbonate both ground, precipitated and colloidal; calcium carbonates which are treated with stearate; crushed or ground quartz; alumina; aluminum hydroxide; titanium dioxide; diatomaceous earth; reinforcing silicas such as fumed silica, precipitated silica, and hydrophobed reinforcing silica; iron oxide; carbon black and graphite. The amount of filler is preferably from 5 to 50 weight percent based on the total weight of the RTV silicone sealant composition.

The titanium catalysts for promoting cure of the prepared RTV silicone sealant compositions of this invention are those illustrated in U.S. Patents 3,151,099, 3,161,614 and 3,175,993. This catalyst is typically tetraalkoxytitanates or chelated titanium compounds. Examples of the preferred titanium catalysts include tetraethyl titanate, tetraisopropyl titanate, tetra-n-propyl titanate, tetrabutyl titanate, bis-acetylacetonyldiisopropyl titanate, 2,5-diisopropyl-bis-ethylacetoacetate titanium and 1,3-dioxypropane-titanium-bis(ethylacetoacetate). U.S. Patent 4,722,967 teaches in more detail the chelated titanates. The amount of titanium catalyst is a catalytic amount for curing the prepared RTV silicone sealant composition, and is preferably from 0.1 to 5 weight percent, based on the total weight of the prepared RTV silicone sealant composition.

Other ingredients which are conventionally used in RTV silicone sealant compositions such as adhesion promoters, fungicides, colorants, pigments, plasticitizers and silane chain extenders such as dialkyldialkoxy-silanes are added as long as they do not interfere by enhancing bubble production, deteriorating curing properties, eroding cured physical properties, or reducing bonding between the cured sealant and substrates.

The oximosilicon compound is added to a previously prepared RTV silicone sealant composition, to one that is just made, one which has been prepared and stored, or one that is obtained commercially. Our oximosilicon compound is preferably admixed with the prepared RTV silicone sealant composition after it has been deaired or devolatilized, because this allows lower amounts of oximosilicon compound to be used due to reduction of some of the by-product methanol or ethanol. The amount of oximosilicon compound required to effectively reduce or eliminate bubble formation in the curing RTV silicone sealant composition is directly related to the amount of by-product methanol and ethanol in the prepared RTV silicone sealant composition. Amounts of oximosilicon compound greater than 3 weight percent based on the total weight of the RTV silicone sealant composition, tend to create undesirable physical properties in the cured sealant, such as increased modulus, greater percentage of shrinkage upon cure. and decreased elongation. If the amount of by-product methanol and ethanol in the prepared RTV silicone sealant composition is greater than 0.5 weight percent. based on the total weight of said composition, a dealkanolization step is preferably employed. It can occur while mixing is taking place by reduced pressure (partial vacuum) and can also include heating to effectively remove the volatiles. This mixing procedure is done under conditions which exclude exposure of the materials to atmospheric moisture, especially if the resulting modified RTV silicone sealant composition is to be packaged and stored for either shipment or later use. When the preparation of the prepared RTV silicone sealant composition involves removal of volatiles, such as a dealkanolization step, the crosslinkers with low boiling points might also be lost without proper precaution. Therefore, one should check the storage stability to ensure that the resulting compositions, when modified with our oximosilicon compound, are stable during storage and will not cure in their storage containers.

Our oximosilicon comDound modified RTV silicone sealant composition is prepared for the purpose of bonding at least two surfaces of non-porous substrates in a confined configuration where the substrates include metals, such as aluminum, steel, iron and metal alloys, or organic polymer based materials. Such metals. alloys and polymeric materials are often found in internal combustion engines. associated engine components and/or engine compartments. The configurations may be gaskets which seal various gases or liquids that are used in and around engines to isolate them from each other, keep them within their respective chambers or elimination of them from the outside environment.

In a typical application. the oximosilicon compound modified RTV silicone sealant composition is brought into contact with at least one surface of a non-porous substrate by conventional means, such as extrusion, coating, injection, knifing or rolling The surfaces of at least two of the substrates are then brought together to form a confined configuration where the substrates will be adhered to each other via a bond formed by means of the silicone sealant composition. If the confined configuration is in or around an internal combustion engine and is a gasket bonding two parts where the hot gases such as those formed by igniting fuel. our oximosiiicon compound modified RTV silicone sealant composition is applied to the substrates, the configuration formed, and while the composition is curing, the engine can surprisingly be started to test for leaks. In such situations, the temperature increases as the engine is being operated, and the curing RTV silicone sealant composition is exposed to temperatures of at least 40°C. At temperatures above 40°C, the by-product methanol or ethanol will rapidly vaporize and form bubbles unless our oximosilicon compound is present in the sealant composition as a modifier.

It is believed that the by-product methanol and ethanol tends to collect in micelles, and therefore can readily form bubbles when the methanol or ethanol vaporize. The methanol or ethanol generated during the curing process are dispersed throughout the entire volume of the curing composition and therefore are less likely to form bubbles. The higher the temperature that the curing sealant composition is exposed to, the greater the amount of bubbles formed during the curing process. unless our oximosilicon compound is first added to the sealant composition. Also, the higher the amount of the by-product methanol and ethanol present in the sealant composition, the greater the amount of bubble formation will be observed, unless our oximosilicon compound is added to the composition. Bubble formation can and does form even under ambient conditions when it is positioned in a confined configuration. Of course, this is more likely to happen when the curing RTV silicone sealant composition is exposed to higher temperatures. Even under ambient curing conditions, our oximosilicon compound reduces bubble formation when added to the silicone sealant composition.

After our oximosilicon compound modified RTV silicone sealant composition is applied to substrates, it is necessary to expose it to atmospheric moisture to cause cure and bonding of the substrates together. In the confined configuration, the exposed edge of the RTV silicone sealant composition is small in comparison to the total volume of the curing composition. Therefore, the vaporizing methanol or ethanol have difficulty escaping into the atmosphere. During this curing process. the number and size of bubbles in the cured silicone sealant is minimized or eliminated compared to an equivalent RTV silicone sealant without our oximosilicon compound. The undesirable bubbles are observed to form within the sealant layer. as well as. at the interface between the substrates confining the cured silicone sealant.

Our modified RTV silicone sealant compositions have increased working time compared to those sealant compositions which do not contain the oximosilicon compound. Another advantage of these compositions is that the modulus of the cured product is not increased by the use of the oximosilicon compound.

The resulting silicone sealant. when used in internal combustion engine powered equipment, preferably exhibit fluid and blow out resistance, involving fluids, lubricants and coolants. The definition of "blow-out resistance" is the resistance of a curing sealant composition to leaking when gas or liquid pressure is applied to one side of a gasket, particularly resistance to hot gas pressure. When a pressure leak test is performed on a gasket to determine if the gasket will be effective. such a test is preferably delayed for 20 minutes to 24 hours to assure enough time for the sealant composition to cure and take on a sufficient amount of structure or green strength to pass the leak test. A pressure leak test is preferably short in duration, usually less than 15 minutes, and more preferably less than 5 minutes. The pressure leak test is conducted at 82°C. The pressure leak test determines whether bubble formation is a problem. Other temperatures might be used. but it was found that 82°C. represented an excellent condition to distinguish between acceptably prepared RTV silicone sealant compositions. such as those which are modified with our oximosilicon compounds, and those which are not acceptable. Under such conditions of time and temperature, detrimental bubble formation would be significant, if the prepared RTV silicone sealant composition were not modified with our oximosilicon compound.

The thickness of the bead of an RTV silicone sealant composition is preferably between 1 and 20 mm. Such thicknesses are useful in FIPG applications for confined configurations, especially in the motor vehicle or automotive industry.

This invention is further illustrated by the following example which is presented for the purpose of demonstrating our invention that is properly delineated in the claims. In the example, "part" or "parts" refer to part or parts by weight and all viscosities were measured at 25°C.

### EXAMPLE 1

Prepared RTV silicone sealant compositions were obtained by mixing in a Ross™ mixer (a double planetary change can mixer), 100 parts of a polydiorganosiloxane mixture having a viscosity of 65 Pa·s, made by the process described in U.S. Patent 4,898,910, and having polydiorganosiloxanes of the formulae 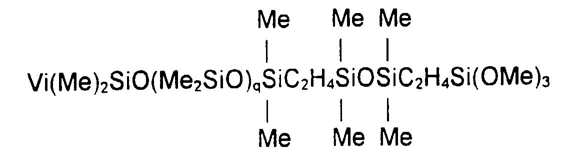 and 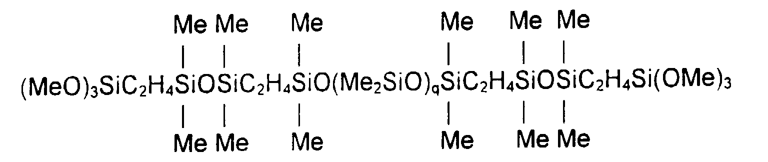 where Me is methyl, Vi is vinyl, and q has an average value such that the viscosity is 65 Pa·s and 20 percent of the endgroups are vinyldimethylsiloxy units, with 11.1 parts of a crosslinker mixture of 70 weight percent of methyltrimethoxysilane, 16 weight percent of diisopropoxytitanium bis-(ethylacetoacetate), 5 weight percent of tetrabutyltitanate, 3.3 weight percent of 3-mercaptopropyltrimethoxysilane, 2 weight percent of beta-aminoethyl-gammaaminopropyltrimethoxysilane, 1.4 weight percent of methanol, and 2.3 weight percent of impurities. The resulting mixture was agitated for 5 minutes while drawing a vacuum, then 9.4 parts of fumed silica filler were added and mixed for two minutes without applying a vacuum before adding 60.3 parts of precipitated calcium carbonate which had a stearate treated surface, 4 parts of a ground calcium carbonate, and 0.09 part of a black pigment.

After these fillers were added, the resulting mixture was mixed for 15 minutes while drawing a vacuum to obtain the prepared RTV silicone sealant composition. Three different oximosilicon compounds were then mixed with this silicone sealant composition using a Semkit(R) mixer. The oximosilicon compounds were vinyltri(ethylmethylketoximo)silane (VTO), methyltri(ethylmethylketoximo)silane (MTO), and an oximosilane mixture (OX-MIX) of 47 weight percent of ethoxytri(ethylmethylketoximo)silane, 36 weight percent of diethoxydi(ethylmethylketoximo)silane, 7 weight percent of triethoxy(ethylmethylketoximo)silane, 8 weight percent of tetra(ethylmethylketoximo)silane, and 2 weight percent of impurities. Each oximosilicon compound was added in concentrations to provide 0.5 wt%, 1.0 wt%, and 1.5 wt% to make compositions for evaluation of the bubble formation where the combination of sealant composition and oximosilicon compound was 100 wt%. Immediately prior to the addition of the oximosilicon compound, the prepared RTV silicone sealant composition contained 0.239 weight percent of methanol. based on the total weight of the sealant composition. This preparation set was designated Process A in Table 1.

Additional RTV silicone sealant compositions were prepared as described above, except that the mixing times and vacuum times were different. After the silica filler was added to the mixture of polydiorganosiloxane and crosslinker, the resulting mixture was mixed for 3 minutes, then the mixture was mixed for 20 additional minutes while applying vacuum. This preparation set was designated Process B. Prior to addition of the oximosilicon compound, the prepared RTV silicone sealant composition contained 0.125 weight percent methanol, based on the total weight of the composition.

A control RTV silicone sealant composition, without the addition of our oximosilicon compound. and each of those sealant compositions of Process A and B with the added oximosilicon compound, were tested for bubble formation. A bead of RTV silicone sealant composition was placed on the surface of an acrylic panel using shims to obtain a 5 mm thickness when another acrylic panel was placed over the acrylic panel bearing the bead of silicone sealant. Each acrylic panel was 7.62 cm by 7.62 cm. A heavy block of granite was placed on the top acrylic panel of this assembly to distribute the force evenly. Each test panel, so prepared, was exposed to elevated temperatures one hour after curing began. This temperature was 82°C. and was obtained by placing the test panels in a forced air oven. The test conditions were 5 minutes in length. The acrylic panels were transparent so bubble formation could be viscually observed through the panels without disturbing the RTV silicone sealant gasket. A 90-watt incandescent light bulb was used to observe bubble formation through the acrylic panels.

There were two types of bubble formation observed, a "surface bubbling" which was the formation of pin-sized holes at the surface between the curing RTV silicone sealant composition and the acrylic panel. The other type was "internal voids" which was formation of bubbles within the curing mass of RTV silicone sealant composition. Bubbling which produced internal voids was determined to be the most detrimental to the performance of a gasket formed by an RTV silicone sealant composition. The internal void formation was rated from 0 to 10, where 0 was a cured sealant with no bubble formation and 10 was a cured sealant with excess bubble formation. A 0 rating was given to a test sample which had no apparent internal voids and for a given composition had the highest specific gravity. A 10 rating was given to a test sample which had sufficient internal void formation to reduce the specific gravity by more than 10% as compared to an equivalent composition without any internal void formation. As this internal void formation rating of 0 to 10 was a relative evaluation, the values were subjective with respect to one another. The surface bubbling was also evaluated using a rating of 0 to 10 where 0 was essentially no bubble formation on the surface between the cured sealant gasket and the panel and 10 exhibited many bubbles at the interface. Because the internal void formation was considered to be more critical, the surface bubbling was not further defined, but left subjective.

In addition to bubble formation tests, the physical properties of each RTV silicone sealant composition were evaluated after test pieces were prepared and allowed to cure for 8 days at ambient conditions. The measured properties were durometer on the Shore A scale, tensile strength at break, elongation at break, and modulus at 100% elongation. The extrusion rate was determined on the uncured RTV silicone sealant composition by extruding it through a nozzle with a 0.3175 cm orifice using a 620.5 kPa pressure and by measuring the amount extruded in grams per minute (g/min). Measurements used to evaluate the curing characteristics were skin-over-time (SOT), tack-free-time (TFT), and deep section cure (DSC). The durometer was determined according to ASTM D 2240, Scale A. The tensile strength at break, the elongation at break, and the 100% modulus were determined by ASTM D 412. SOT was the time in minutes measured between the time a bead of sealant composition was extruded into a moisture containing atmosphere and the time at which a light touch of a finger to the surface of the bead did not cause sealant composition to stick to the finger when withdrawn. TFT was the time in minutes measured between the time a bead of sealant composition was extruded and the time a square of polyethylene film was placed on the sealant bead and then removed without marring the surface of the bead. DSC was determined by placing the RTV sealant composition in a small container (same size container used for each determination); and the surface was screed to remove the excess composition. After 24 hours, the cured part of the sealant was removed, wiped and its thickness was measured and reported in Table 2, in millimeters. The DSC was an indication of the green strength of each composition where the thicker the DSC, the greater the green strength.

The results of these bubble tests and physical properties are found in Tables 1 and 2, respectively.

**TABLE 1**

| BUBBLE TESTS | | | |
|---|---|---|---|
| TEST DONE AFTER PREPARATION | | | |
| OXIMOSILICON COMPOUND | PROCESS | SURFACE BUBBLE VALUE | INTERNAL VOID VALUE |
| NONE | A | 1 | 4 |
| NONE | B | 2 | 5 |
| 0.5% MTO | A | 0 | 0 |
| 0.5% MTO | B | 1 | 0 |
| 1.0% MTO | A | 3 | 0 |
| 1.0% MTO | B | 3 | 0 |
| 1.5% MTO | A | 1 | 0 |
| 1.5% MTO | B | 0 | 0 |
| 0.5% VTO | A | 1 | 0 |
| 0.5% VTO | B | 10 | 1 |
| 1.0% VTO | A | 1 | 1 |
| 1.0% VTO | B | 0 | 0 |
| 1.5% VTO | A | 1 | 2 |
| 1.5% VTO | B | 1 | 1 |
| 0.5% OX-MIX | A | 0 | 1 |
| 1.0% OX-MIX | A | 0 | 4 |
| 1.0% OX-MIX | B | 1 | 0 |
| 1.5% 0X-MIX | A | 1 | 1 |
| 1.5% OX-MIX | B | 2 | 0 |

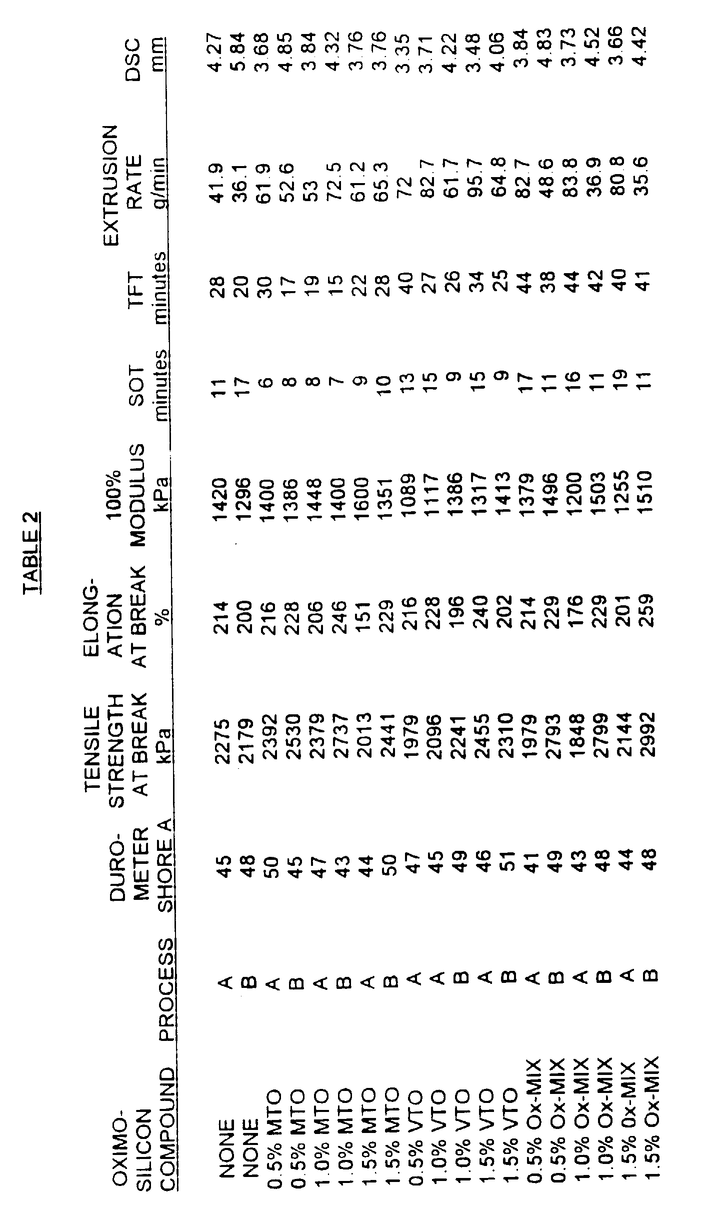

Table 1 shows, comparing those without oximosilicon compound to those containing oximosilicon compound, that both the surface gassing and internal voiding were reduced by addition of our oximosilicon compound. An exception to this was for the composition containing 0.5% VTO, where the surface gassing actually increased. but the internal voiding decreased. The sealant composition with the best results was the one in which 1.0% VTO was added to the silicone sealant composition of Process B. The physical properties in Table 2 did not vary greatly from the controls which surprisingly proves that the addition of our oximosilicon compound to reduce bubble formation in the cured product is an acceptable approach.

## Claims

1. A method of forming a seal between at least two non-porous substrates comprises:
(I) adding from 0.5 to 3, inclusive, weight percent based on the total weight of a room temperature vulcanizable silicone sealant composition, of an oximosilicon compound which is an oximosilane or a mixture of oximosilanes and which has a general formula RₓSi(OX)_{y}(OR¹)_{z} in which R is methyl, ethyl, vinyl, or phenyl, R¹ is methyl or ethyl, OX is an alkylmethylketoximo in which the alkyl group has from 1 to 5 carbon atoms inclusive, x has an average value of from 0 to 2 inclusive, y has an average value of from 2 to 4 inclusive, z has an average value of from 0 to 2 inclusive, the sum of x, y, and z is 4, and the mixture of oximosilanes have at least 80% of the oximosilane molecules with 2 or more alkylmethylketoximo groups per molecule, to said sealant composition comprising a polydiorganosiloxane having endgroups containing a silicon atom with at least two silicon-bonded alkoxy groups or alkoxyalkoxy groups wherein the alkoxy is methoxy, ethoxy, propoxy, or butoxy, and the alkoxyalkoxy is methoxymethoxy, methoxyethoxy, ethoxymethoxy, or ethoxyethoxy; a crosslinker having at least three silicon-bonded alkoxy groups per molecule where the alkoxy is methoxy or ethoxy; a filler; a titanium catalyst for promoting room temperature cure of the silicone sealant composition; and by-product methanol or ethanol formed during preparation of said sealant composition;
(II) applying the resulting silicone sealant composition from (I) to at least one non-porous substrate, forming an assembly of the uncured silicone sealant composition bonding the non-porous substrates to at least one other non-porous substrate;
(III) subjecting the assembly to conditions which form detrimental bubbles if the oximosilicon compound is not present prior to the cure of the silicone sealant composition; and
(IV) completely curing the silicone sealant composition thereby generating an assembly of at least two non-porous substrates bonded with a cured silicone sealant which is essentially free of detrimental bubbles.

2. The method in accordance with claim 1 in which said sealant composition has as the polydiorganosiloxane. a polydiorganosiloxane of the formula 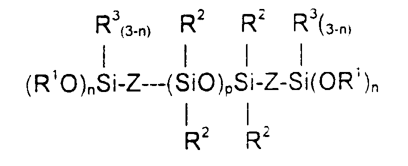 where R¹ is methyl or ethyl; R² is methyl, ethyl, vinyl, or phenyl; R³ is methyl, ethyl, or phenyl; n is 2 or 3; p is at least 200; and Z is a divalent hydrocarbon radical free of aliphatic unsaturation of 2 to 18 carbon atoms or a divalent group of the formula 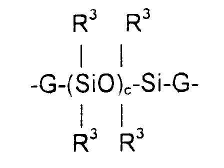 where R³ is as above, G is a divalent hydrocarbon radical free of aliphatic unsaturation of 2 to 18 carbon atoms, and c is from 1 to 6 inclusive.

3. The method in accordance with claim 1 or claim 2 in which the oximosilicon compound is vinyltri(ethylmethylketoximo)silane or methyltri(ethylmethylketoximo)silane.

4. The method in accordance with claim 1 or claim 2 in which the oximosilicon compound is a mixture of oximosilanes where x is 1, R is methyl, R¹ is methyl, and y is less than 3, and z is greater than 0.1.

5. The method in accordance with any of claims 1 to 4 in which said sealant composition is prepared by performing mixing operations under reduced pressure while removing volatiles before addition of the oximosilicon compound.

6. The method in accordance with any of claims 1 to 5 in which the non-porous substrates are parts of an internal combustion engine; the silicone sealant composition forms a gasket assembly; and the engine is started prior to complete cure of said sealant composition and is run for at least two minutes.
